# EUROPÄISCHE PATENTSCHRIFT

(11) **EP 0 681 878 B1**
(45) Veröffentlichungstag und Bekanntmachung des Hinweises auf die Patenterteilung: **08.07.1998**
(21) Anmeldenummer: 95106362.7
(22) Anmeldetag: 27.04.1995
(51) Int. Cl.: B22C 23/00, B29C 45/37

(54) **Zeitraumstempel zum Einsetzen in eine form zur Metall-oder Kunststoffverarbeitung**
Period stamp for insertion into mould for metal or plastics processing
Dispositif à marquage pour l'insertion dans un moule pour le traitement de métal ou de plastique

(30) Priorität: 03.05.1994 DE 4415583
(43) Veröffentlichungstag der Anmeldung: 15.11.1995
(73) Patentinhaber: Opitz GmbH, 63741 Aschaffenburg (DE)
(72) Erfinder: Opitz, Heiko, D-63743 Aschaffenburg (DE)
(74) Vertreter: Tiedtke, Harro, Dipl.-Ing.

(56) Entgegenhaltungen:
- DE-A- 1 929 875
- DE-U- 8 526 599
- DE-U- 9 314 975
- 'Normalien-Technologie' , PLASTVERARBEITER 44(1993) AUGUST, NO. 8 , HEIDELBERG * Seite 126 - Seite 128 *

## Beschreibung

Die Erfindung bezieht sich auf einen Zeitraumstempel zum Einsetzten in eine Form zur Metall- oder Kunststoffverarbeitung nach dem Oberbegriff des Patentanspruchs 1.

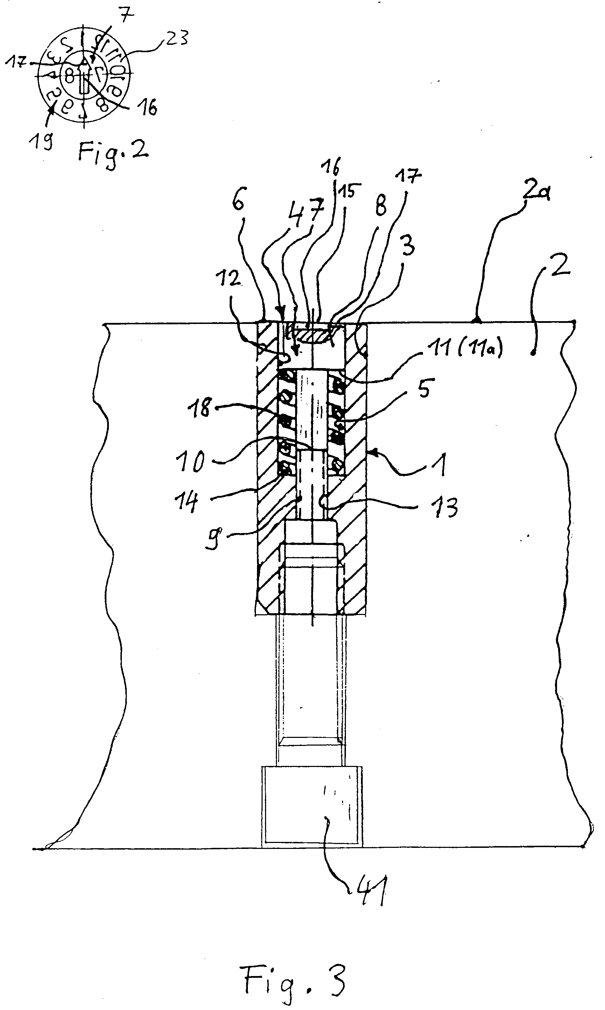

Ein bekannter Zeitraumstempel ist im deutschen Gebrauchsmuster G 85 26 599.3 offenbart. Gemäß diesem in Fig. 3 in zusammengebautem Zustand dargestellten Zeitraumstempel ist ein zylindrischer Grundkörper 1 in einer in einer Form 2 ausgebildeten Bohrung 3 derart befestigt, daß seine vordere Stirnfläche 4 bündig mit einem Abschnitt der formenden Fläche 2a der Form 2 abschließt. D. h. die vordere Stirnfläche 4 ist dem Forminneren zugewandt. Im Grundkörper 1 ist eine durchgängige zylindrische Ausnehmung 5 ausgebildet, wodurch am Grundkörper 1 auf seiner dem Forminneren zugewandten Stirnseite eine ebene Ringfläche 6 entsteht. Die Ringfläche 6 ist mit eingravierten Markierungen, wie beispielsweise mit einer Skala, versehen.

In der Ausnehmung 5 ist ein Einsatz 7 angeordnet, der als eine Schraube ausgebildet ist, und im wesentlichen aus einem zylindrischen Kopfabschnitt 8 und einem mit einem Gewinde 9 versehenen zylindrischen Schaftabschnitt 10 besteht. Der Schaftabschnitt 10 ist im Durchmesser kleiner ausgebildet als der Kopfabschnitt 8, so daß zwischen Kopfabschnitt 8 und Schaftabschnitt 10 eine Radialstufe 11 ausgebildet ist. Durch die Radialstufe 11 entsteht am Einsatz 7 eine ringförmige axiale Anliegefläche 11a. Der Einsatz hat eine vordere dem Forminneren zugewandte kreisrunde ebene Stirnfläche 15, die mit einem Schlitz 16 und mit einer eingravierten Pfeilspitze 17 versehen ist (siehe auch Fig. 2).

Die im Grundkörper 1 ausgebildete Ausnehmung 5 hat einen ersten dem Forminneren zugewandten Bohrungsabschnitt 12 mit einem Durchmesser, der etwas größer als der Außendurchmesser des Kopfabschnitts 8 ist, so daß der Kopfabschnitt 8 im ersten Bohrungsabschnitt 12 der Ausnehmung 5 versenkbar ist. Der mittleren Abschnitt der Ausnehmung 5 hat eine Gewindebohrung 13 mit kleinerem Durchmesser als der Durchmesser des ersten Bohrungsabschnitts 12, so daß eine Radialstufe 14 ausgebildet wird. Das Gewinde der Gewindebohrung 13 passt mit dem am Einsatz 7 ausgebildeten Gewinde 9 zusammen.

Zwischen der ringförmigen axialen Anliegefläche 11a des Einsatzes 7 und der Radialstufe 14 des Grundkörpers 1 ist eine spiralförmige Druckfeder 18 vorgesehen. Die Druckfeder 18 ist demnach im ersten Bohrungsabschnitt 12 untergebracht, so daß sie den Schaftabschnitt 10 umgibt.

Beim Zusammenbau des bekannten Zeitraumstempels wird zunächst die Druckfeder 18 in den ersten Bohrungsabschnitt 12 eingesetzt. Dann wird der Einsatz 7 mit seinem schaftseitigen Ende in die zylindrische Ausnehmung 5 eingesetzt und das am Schaftabschnitt 10 ausgebildete Gewinde 9 mit dem in der Gewindebohrung 13 ausgebildeten Gewinde verschraubt, bis die vordere Stirnfläche 15 des Einsatzes 7 mit der Ringfläche 6 des Grundkörpers 1 bündig abschließt. Dabei wird die Feder 3 komprimiert und bringt eine Reibungskraft zwischen dem Einsatz 2 und dem Grundkörper 1 auf, so daß der Einsatz 7 in einer bestimmten vorgewählten Drehposition gegenüber dem Grundkörper 1 haltbar ist.

Ein Vorteil dieser Anordnung besteht darin, daß der Einsatz 7 lediglich vom Innenbereich der Form her in den Grundkörper 1 eingeschraubt werden muß. Das heißt, zum Wechseln des Einsatzes 7 ist es lediglich erforderlich, daß der Zeitraumstempel vom Forminneren her zugänglich ist.

Ein Nachteil dieser Anordnung besteht jedoch darin, daß bei der Einstellbewegung des Einsatzes 7, also beim Verdrehen des Einsatzes 7 gegenüber dem Grundkörper 1, bedingt durch die Gewindesteigung, sich die Höhenposition des Einsatzes 7 gegenüber dem Grundkörper 1 verändert. Jede Drehposition des Einsatzes 7 bedingt eine andere Höhenposition und somit eine andere Wanddicke am Formteil im Bereich der Stirnfläche 15 des Einsatzes 7.

Der Erfindung liegt daher die Aufgabe zugrunde, einen gattungsgemäßen Zeitraumstempel derart weiterzubilden, daß bei unterschiedlichen Einstellungen des Zeitraumstempels die Wanddicken der jeweils hergestellten Formteile gleich bleiben, wobei ein einfacher Wechsel des Einsatzes beibehalten werden soll.

Diese Aufgabe wird durch die Merkmale des Anspruchs 1 gelöst.

Durch die im Grundkörper ausgebildete axiale Anliegefläche, die als Anschlagfläche für die am Einsatz ausgebildete ringförmige axiale Anliegefläche dient, wird beim Verstellen des Einsatzes gegenüber dem Grundkörper immer eine gleichbleibende Höheneinstellung gewährleistet. Die zur Beibehaltung einer bestimmten Einstellung des Einsatzes notwendige Haltekraft wird durch das federvorgespannte in der zylindrischen Ausnehmung untergebrachte Halteteil dadurch aufgebracht, daß der Schaftabschnitt des Einsatzes mit dem Halteteil in Gewindeverbindung ist und die zwei Anliegeflächen durch die Federvorspannung des Halteteils aneinandergepresst werden, so daß eine Reibungskraft erzeugt wird.

Gemäß den Ansprüchen 2 und 3 ist das Halteteil als eine verdrehsichere, in der Ausnehmung axial bewegliche Gewindemutter ausgebildet, die zwischen zwei in der Ausnehmung des Grundkörpers ausgebildeten Anschlägen axial beweglich ist, so daß auf vorteilhafte Weise die Federvorspannung und damit die Haltekraft eingestellt werden kann.

Weitere vorteilhafte Ausgestaltungen der Erfindung sind Gegenstand der übrigen Unteransprüche.

Die Erfindung wird nachstehend anhand eines bevorzugten Ausführungsbeispiels unter Bezugnahme auf die Zeichnungen näher erläutert.

Fig. 1 zeigt eine Längsschnittansicht des erfindungsgemäßen Zeitraumstempels in zusammengebautem Zustand.

Fig. 2 zeigt eine Draufsicht in Richtung des Pfeils des in Fig. 1 dargestellten Zeitraumstempels.

Fig. 3 zeigt eine Schnittansicht eines bekannten Zeitraumstempels, wie er im deutschen Gebrauchsmuster G 85 26 599.3 offengelegt ist.

Die vorstehend bei der Beschreibung der Stands der Technik verwendeten Bezugszeichen werden im folgenden bei der Beschreibung des bevorzugten Ausführungsbeispiels beibehalten und bezeichnen die gleichen Bauteile.

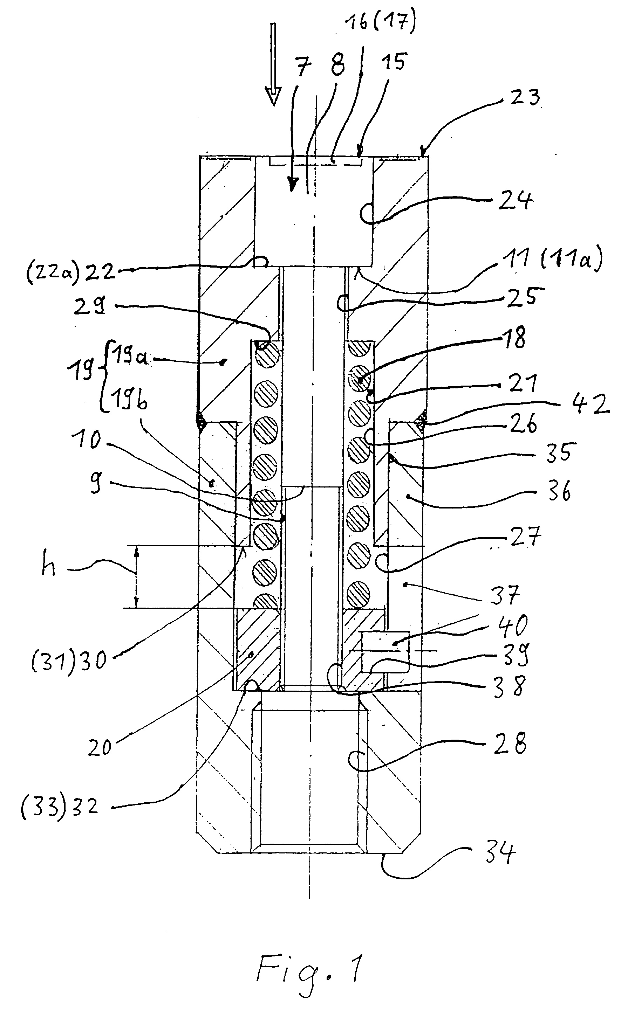

Gemäß Fig. 1 und Fig. 2 besteht der erfindungsgemäße Zeitraumstempel im wesentlichen aus den Bauteilen Grundkörper 19, schraubenförmiger Einsatz 7 und das mit einer Feder 15 vorgespannte Halteteil 20. Der Einsatz 7 des erfindungsgemäßen Ausführungsbeispiels ist identisch zum Einsatz 7 des vorstehend beschriebenen Stands der Technik. Dies ist vorteilhaft, da der Einsatz 7 sowohl in der bekannten Ausführungsform als auch in der erfindungsgemäßen Ausführungsform verwendet werden kann.

Der Grundkörper 19 des erfindungsgemäßen Ausführungsbeispiels hat eine zylindrische Ausnehmung 21. Bis auf die Gestaltung der zylindrischen Ausnehmung 21 ist der Grundkörper 19 identisch zum aus dem Stand der Technik bekannten Grundkörper 1. Auch im erfindungsgemäßen Grundkörper 19 wird daher der Einsatz 7 von der zylindrische Ausnehmung 21 in zusammengebautem Zustand drehbar aufgenommen. Erfindungsgemäß ist in der zylindrischen Ausnehmung 21 in einem mittleren Abschnitt eine Radialstufe 22 ausgebildet. Diese Radialstufe 22 stellt eine axiale Anliegefläche 22a dar, die zum Forminneren hin zeigt. In zusammengebautem Zustand dient diese axiale Anliegefläche 22a als Tiefenanschlag, die gegen die am Kopfabschnitt 8 des Einsatzes 7 ausgebildete axiale Anliegefläche 11a anschlägt. Das Halteteil 20 ist verdrehsicher jedoch axial beweglich in einem mittleren Abschnitt der zylindrischen Ausnehmung 21 aufgenommen. Die Feder 18 ist in der zylindrischen Ausnehmung 21 derart aufgenommen, daß sie eine Vorspannung auf das Halteteil 20 aufbringt. Das Halteteil 20 ist mit einem Gewinde 20a versehen, das mit dem am Schaftabschnitt 10 ausgebildeten Gewinde 9 des Einsatzes 7 in Eingriff bringbar ist. Die Richtung der Vorspannkraft der Feder 18 ist dabei derart, daß die axiale Anliegefläche 11a des Einsatzes 7 gegen die axiale Anliegefläche 22a des Grundkörpers 19 gepreßt wird. Somit ist es bei dieser Anordnung möglich, daß die Höhenposition des Einsatzes 7 gegenüber dem Grundkörper 19, bzw. der Forminnenfläche 2a gleichbleibend ist, wobei der Einsatz 7 lediglich von der Forminnenseite in den Grundkörper 19 eingeschraubt werden muß.

Nachfolgend werden gemäß Fig. 1 die Bauteile des erfindungsgemäßen Ausführungsbeispiels im einzelnen beschrieben.

Die Außenkontur des Grundkörpers 19 ist als Zylinder ausgebildet. Eine vordere dem Forminnenbereich zugewandte Stirnfläche des Grundkörpers 19 ist, wie bereits erwähnt, als eine ebene Ringfläche 23 ausgebildet, die mit Gravuren versehen ist und einen Teil der formenden Innenfläche der Form bildet (Fig. 2). Die Ringfläche 23 entsteht durch die in der Stirnfläche ausgebildete zylindrische Ausnehmung 21, die sich in axialer Richtung durch den Grundkörper 19 erstreckt.

Die zylindrische Ausnehmung 21 setzt sich beginnend von der Ringfläche 23 aus folgenden Teilbereichen zusammen: dem ersten zylindrischen Bohrungsabschnitt 24, dem zweiten verengten zylindrischen Bohrungsabschnitt 25, dem dritten und vierten zylindrischen Bohrungsabschnitten 26 und 27 und der Gewindebohrung 28. Alle Teilbereiche der zylindrischen Ausnehmung 21 sind konzentrisch zueinander angeordnet.

Der Durchmesser des auf der Seite der Ringfläche 23 ausgebildeten ersten Bohrungsabschnitts 24 und die Tiefenerstreckung des ersten Bohrungsabschnitts 24 von der Ringfläche 23 bis zur Radialstufe 22 ist derart gewählt, daß der Kopfabschnitt 8 genau aufnehmbar ist. Der zweite Bohrungabschnitt 25 beginnt an der Radialstufe 22 und erstreckt sich bis zum Beginn des dritten Bohrungsabschnitts 25. Der Durchmesser des zweiten Bohrungsabschnitts 25 ist kleiner als der Durchmesser des ersten Bohrungsabschnitts 24; er ist jedoch so groß gewählt, daß der Schaftabschnitt 10 durchführbar ist.

Der Durchmesser des dritten Bohrungsabschnitts 26 ist größer als der Durchmesser des zweiten Bohrungsabschnitts 25 ausgebildet, so daß am Übergang der beiden Bohrungsabschnitte 25 und 26 eine Radlalstufe 29 ausgebildet wird. Der Durchmesser des dritten Bohrungsabschnitts 26 entspricht in etwa dem Durchmesser des ersten Bohrungsabschnitts.

Der Durchmesser des vierten Bohrungsabschnitts 27 ist größer als der Durchmesser des dritten Bohrungsabschnitts 26, so daß am Übergang der beiden Bohrungsabschnitte 26 und 27 eine Radialstufe 30 ausgebildet wird. Die Radialstufe 30 stellt eine ringförmige axiale Anschlagfläche 31 dar.

Der Innendurchmesser der Gewindebohrung 28 ist kleiner als der Innendurchmesser des vierten Bohrungsabschnitts 27, so daß an dieser Stelle eine weitere Radialstufe 32 ausgebildet wird. Die Radialstufe 32 stellt eine ringförmige axiale Anschlagfläche 33 dar. Die Gewindebohrung 28 öffnet sich zur anderen hinteren Stirnfläche 34 des Grundkörpers 19.

Der Grundkörper 19 ist zum Zweck der Montage, wie später noch näher erläutert wird, in seinem mittleren Abschnitt in zwei Teile, einem vorderen Teil 19a und einem hinteren Teil 19b unterteilt. Am vorderen Teil 19a des Grundkörpers 19 ist im Bereich des dritten Bohrungsabschnitts auf seiner Mantelwandung eine ringförmige Ausnehmung 35 ausgebildet. Der Außendurchmesser der Ausnehmung 35 ist so festgelegt, daß die Außnehmung 35 in den vierten Bohrungsabschnitt 27 passt. Das hintere Teil 19b hat im Bereich des vierten Bohrungsabschnitts 27 ein in axialer Richtung zur Forminnenseite zeigenden ringförmigen Verlängerungsabschnitt 36 ausgebildet.

Zur Montage der beiden Teile 19a und 19b wird der Verlängerungsabschnitt 36 des hinteren Teils 19b auf die am vorderen Teil 19a ausgebildeten Ausnehmung 35 geschoben, bis die Stirnfläche des Verlängerungsabschnitts 36 gegen die durch die Ausnehmung 35 am vorderen Teil 19a gebildete ringförmige Stufenfläche stößt. An diesem Stoß ist zum Verbinden des vorderen Teils 19a mit dem hinteren Teil 19b eine Verschweißung 42 ausgebildet, die beispielsweise als eine Laserschweißnaht um den ganzen Umfang des Grundkörpers 19 herum ausgebildet sein kann. Die Verschweißung des vorderen Teils 19a und des hinteren Teils 19b erfolgt jedoch erst bei einem späteren Montageschritt, wie nachfolgend noch beschrieben wird.

Im Bereich des vierten Bohrungsabschnitts 27 ist in der Mantelwandung des Grundkörpers 19 ein sich in axialer Richtung erstreckendes Langloch 37 ausgebildet.

Bezüglich der Beschreibung des Einsatzes 7 wird auf die vorstehende Beschreibung des Stands der Technik verwiesen.

Das Halteteil 20 ist als eine mit einem Innengewinde 38 versehene Mutter ausgebildet. Die Außenkontur des Halteteils 4 ist zylinderförmig. Der Außendurchmesser des Halteteils 20 ist etwas kleiner als der Durchmesser des vierten Bohrungsabschnitts 27 jedoch größer als der Durchmesser des dritten Bohrungsabschnitts 26 gewählt. Das Halteteil 20 ist an einem mittleren Abschnitt seiner Mantelwandung mit einer radialen Bohrung 39 versehen, in die ein Stift 40 einpressbar ist. Der Außendurchmesser des Stifts 40 ist etwas kleiner als der Durchmesser des Langlochs 37 ausgebildet.

Die Feder 18 ist als eine spiralförmige Druckfeder ausgebildet, deren Innendurchmesser größer als der Außendurchmesser des Schaftabschnitts 10 ist, und deren Außendurchmesser kleiner als der Durchmesser des dritten Bohrungsabschnitts 26 ist.

Nachfolgend wird der Zusammenbau und die Funktionsweise des Zeitraumstempels beschrieben.

Zunächst wird im hinteren Teil 19b des Grundkörpers 19 das Halteteil 20 in den vierten Bohrungsabschnitt 27 eingelegt, so daß die eine Stirnseite des Halteteils 20 an der einen Anschlagfläche 33 anliegt. Von der Außenseite des Grundkörpers 19b wird nun durch das Langloch 37 hindurch der Stift 40 in die Bohrung 39 des Halteteils 20 eingepaßt, so daß der Stift 40 fest mit dem Halteteil 20 verbunden ist. Auf diese Weise ist das Halteteil 20 im vierten Bohrungsabschnitt 27 axial beweglich gelagert und gleichzeitig gegen Verdrehen in Umfangsrichtung gesichert. Die Feder 18 wird in den dritten Bohrungsabschnitt 26 des vorderen Teils 19a eingeführt, so daß ihre eine Stirnseite an der Radialstufe 29 anliegt. Das derart vorbereitete vordere Teil 19a und das derart vorbereitete hintere Teil 19b wird nun zusammengesteckt und miteinander verschweißt, wie vorstehend bereits beschrieben wurde.

Die Länge der Feder ist so festgelegt, daß das Halteteil 20 mit einer vorbestimmten Kraft gegen die eine Anschlagfläche 33 gedrückt wird. Das Halteteil 20 ist in diesem Zustand zwischen der einen Anschlagfläche 33 und der anderen Anschlagfläche 31 in axialer Richtung gegen die Vorspannung der Feder 18 beweglich. Eine Verdrehung des Halteteils 20 um seine Längsachse wird, wie bereits erwähnt, durch das Eingreifen des Stifts 40 in das Langloch 37 verhindert.

Von der Seite der Ringfläche 23 wird nun der Einsatz 7 mit dem Schaftabschnitt 10 voraus in die zylindrische Ausnehmung 21 eingesetzt und durch eine Drehbewegung in das Halteteil 4 eingeschraubt. Während des Einschraubvorganges des Einsatzes 7 legt sich die axiale Anliegefläche 11a des Kopfabschnitts 8 an die axiale Anliegefläche 22a des Grundkörpers 19 an. Somit hat der Einsatz seine gewünschte Höhenstellung gegenüber der vorderen Stirnfläche des Grundkörpers 19 erreicht. Durch weiteres Eindrehen des Einsatzes 7 in das Halteteil 20 wird das Halteteil 20 um einen vorbestimmten Axialhub h soweit angehoben, bis die andere Stirnseite des Halteteils gegen die andere Anschlagfläche 31 anschlägt. Durch eine Ausdrehbewegung des Einsatzes 7 gegenüber dem Grundkörper 19 können beliebige Einstellungen zwischen dem Einsatz 7 und dem Grundkörper 19 vorgenommen werden (siehe auch Fig. 2), wobei eine vorbestimmte Position zwischen den zwei Bauteilen durch die mittels der Feder 18 erzeugten Reibkraft zwischen der axialen Anliegefläche 11a und der axialen Anliegefläche 22a beibehalten wird. Das Gewinde 9 des Einsatzes 7 weist dabei eine Steigung von 0,2 bis 0,6 auf, wobei der Einsatz 7 selbst vorzugsweise zwischen 1 und 5 Gewindegängen in das Halteteil 4 eingeschraubt wird.

Bei einer weiteren Ausdrehbewegung des Einsatzes 7 wird das Halteteil 20 wieder auf der Anschlagfläche 33 abgesetzt und der Einsatz 7 bewegt sich in Axialrichtung zum Innenbereich der Form hin aus dem Grundkörper 19 heraus und kann entnommen werden.

Der erfindungsgemäße Zeitraumstempel wird genauso, wie vorstehen beim Zeitraumstempel nach dem Stand der Technik beschrieben, in die in der Forminnenseite ausgebildeten abgestuften Bohrung 3 (siehe Fig. 3) eingesetzt. Von der Außenseite der Form wird der Grundkörper 19 über einen Gewindebolzen 41 (Fig. 3) mit der Gewindebohrung 28 verschraubt und in der in der Form ausgebildeten Bohrung 3 (Fig. 3) festgehalten.

Der Vorteil dieser Anordnung besteht darin, daß zum Austausch des Einsatzes des in der Form einbauten Zeitraumstempels ledigliche eine Zugänglichkeit zum Zeitraumstempel vom Innenbereich der Form erforderlich ist. Der Austausch des Einsatzes kann stattfinden ohne daß der Grundkörper 1 aus der Form ausgebaut werden muß, oder daß eine Zugänglichkeit zum Zeitraumstempel von der Formaußenseite her erforderlich wäre.

Im vorstehend beschriebenen Ausführungsbeispiel wurde die Verdrehsicherung des Halteteils 20 gegenüber dem Grundkörper 19 durch den mit dem Langloch 37 in Eingriff stehenden Stift 40 bewerkstelligt. Eine Verdrehsicherung zwischen Halteteil 20 und Grundkörper 19 kann jedoch auch durch Ausbilden eines Viel-Nut-Profils zwischen den beiden Bauteilen 20 und 19 ausgeführt werden.

## Patentansprüche

1. Zeitraumstempel zum Einsetzen in eine Form zur Metall oder Kunststoffverarbeitung mit einem in die Form einsetzbaren Grundkörper (19), der an seiner einen Abschnitt der formenden Fläche bildenden Stirnseite eine zylindrische Ausnehmung (21) aufweist, einem als eine Schraube ausgebildeten Einsatz (7), an dem zwischen seinem Kopfabschnitt (8) und seinem Schaftabschnitt (10) eine axiale Anliegefläche (11a) ausgebildet ist, und der von der zylindrischen Ausnehmung (21) drehbar aufnehmbar ist, und einer in der Ausnehmung (21) angeordneten federvorgespannten Haltevorrichtung, die mit dem Einsatz (7) in Eingriff bringbar ist, um den Einsatz (7) in vorgegebenen Umfangspositionen im Grundkörper (19) zu halten, dadurch gekennzeichnet,
daß die zylindrische Ausnehmung (21) eine axiale Anliegefläche (22a) hat, die mit der axialen Anliegefläche (11a) des Einsatzs in Anlage bringbar ist
und daß die Halteeinrichtung ein federvorgespanntes Halteteil (20) hat, das mit dem Schaftabschnitt (10) des Einsatzes (7) in Gewindeverbindung bringbar ist, so daß durch die Federvorspannung der Halteeinrichtung die Anliegefläche (11a) gegen die Anliegefläche (22a) pressbar ist.

2. Zeitraumstempel nach Anspruch 1, dadurch gekennzeichnet, daß das Halteteil (20) eine Gewindemutter mit einer Verdrehsicherung ist, die in der zylindrischen Ausnehmung (21) eine axiale Hubbewgung (h) ausführen kann.

3. Zeitraumstempel nach Anspruch 2, dadurch gekennzeichnet, daß die axiale Hubbewegung zwischen einem im Grundkörper (19) ausgebildeten hinteren Axialanschlag (33) und einem im Grundkörper (19) ausgebildeten vorderen Axialanschlag (31) ausführbar ist.

4. Zeitraumstempel nach einem der Ansprüche 2 bis 3, dadurch gekennzeichnet, daß die Verdrehsicherung durch einen am Umfang der Gewindemutter befestigbaren Stift (40) gebildet wird, der in ein im Grundkörper (19) ausgebildetes sich in axialer Richtung erstreckendes Langloch (37) eingreift und in diesem geführt wird.

5. Zeitraumstempel nach einem der Ansprüche 2 bis 3, dadurch gekennzeichnet, daß die Verdrehsicherung durch ein an der Außenfläche des Halteteils (20) ausgebildetes Vielnutprofil gebildet wird, das mit einem auf der Innenfläche des Grundkörpers (19) ausgebildeten Vielnutprofil in Eingriff bringbar ist.

6. Zeitraumstempel nach Anspruch 5, dadurch gekennzeichnet, daß das Vielnutprofil durch einen Sechskant, Fünfkant, Vierkant, Dreikant oder nur durch zwei Fortsätze zwischen Halteteil (20) und Grundkörper (19) gebildet wird.

7. Zeitraumstempel nach einem der vorstehenden Ansprüche, dadurch gekennzeichnet, daß die Federvorspannung durch eine Druckfeder (18) erfolgt, die sich auf ihrer einen Endseite am Halteteil (20) und an ihrer anderen Endseite an einem in der Ausnehmung ausgebildeten Radialstufe (29) abstützt.

8. Zeitraumstempel nach Anspruch 1, dadurch gekennzeichnet, daß die Anliegefläche (22a) durch einen verengten in der Ausnehmung (21) ausgebildeten Bohrungsabschnitt (25) ausgebildet wird.

9. Zeitraumstempel nach einem der vorstehenden Ansprüche, dadurch gekennzeichnet, daß der Grundkörper (19) zweigeteilt ist und mittels einer Verbindungseinrichtung verbindbar ist.

10. Zeitraumstempel nach Anspruch 9, dadurch gekennzeichnet, daß die Verbindungseinrichtung eine Verschweißung (42) ist.

11. Zeitraumstempel nach einem der vorstehenden Ansprüche, dadurch gekennzeichnet, daß die dem Forminnenbereich zugewandte Stirnseite (15) des Kopfabschnitts (8) bündig mit der dem Forminnenbereich zugewandten Stirnseite des Grundkörpers (19) abschließt.

12. Zeitraumstempel nach einem der vorstehenden Ansprüche, dadurch gekennzeichnet, daß der Außendurchmesser des Grundkörpers (19) konstant ist.

13. Zeitraumstempel nach einem der vorstehenden Ansprüche, dadurch gekennzeichnet, daß auf der dem Formaußenbereich zugewandte Stirnseite des Grundkörpers (19) eine Gewindebohrung (28) ausgebildet ist, in die zur Fixierung des Grundkörpers (19) innerhalb der Form ein an der Form angeordneter Gewindebolzen (41) eingreift.

14. Zeitraumstempel nach Anspruch 13, dadurch gekennzeichnet, daß der in die Gewindebohrung (28) eingreifende Gewindebolzen (41) einstückig mit der Form ausgebildet ist.

15. Zeitraumstempel nach einem der vorstehenden Ansprüche, dadurch gekennzeichnet, daß die dem Forminnenbereich zugewandte Stirnseite des Einsatzs (7) eine für den Eingriff eines Werkzeugs geeignete Ausnehmung (16) hat.

16. Zeitraumstempel nach einem der vorstehenden Ansprüche, dadurch gekennzeichnet, daß die Ausnehmung (16) ein Informationselement des Zeitraumstempels bildet.

## Claims

1. Time stamp for insertion into a mould for metal working or plastics processing, with a basic body (19) which can be inserted into the mould and which has a cylindrical recess (21) on its end face constituting a portion of the moulding surface, with an insert (7) which is designed as a screw and on which an axial bearing surface (11a) is formed between its head portion (8) and its shank portion (10) and which can be received rotatably by the cylindrical recess (21), and with a spring-pretensioned holding device which is arranged in the recess (21) and which can be brought into engagement with the insert (7) in order to hold the insert (7) in predetermined circumferential positions in the basic body (19), characterized in that the cylindrical recess (21) has an axial bearing surface (22a) which can be brought to bear on the axial bearing surface (11a) of the insert, and in that the holding device has a spring-pretensioned holding part (20) which can be brought into threaded connection with the shank portion (10) of the insert (7), so that the bearing surface (11a) can be pressed against the bearing surface (22a) by means of the spring pretension of the holding device.

2. Time stamp according to Claim 1, characterized in that the holding part (20) is a rotationally fixed threaded nut which can execute an axial stroke movement (h) in the cylindrical recess (21).

3. Time stamp according to Claim 2, characterized in that the axial stroke movement can be executed between a rear axial abutment (33) formed in the basic body (19) and a front axial abutment (31) formed in the basic body (19).

4. Time stamp according to either of Claims 2 and 3, characterized in that the rotational fixing is formed by a stud (40) which can be fastened to the circumference of the threaded nut, which stud engages in a long hole (37) which is formed in the basic body (19) and extends in the axial direction and in which the stud is guided.

5. Time stamp according to either of Claims 2 and 3, characterized in that the rotational fixing is formed by a multi-groove profile which is formed on the outer surface of the holding part (20) and which can be brought into engagement with a multi-groove profile formed on the inner face of the basic body (19).

6. Time stamp according to Claim 5, characterized in that the multi-groove profile is formed by a hexagon, pentagon, square or triangle or only by two extensions between the holding part (20) and basic body (19).

7. Time stamp according to one of the preceding claims, characterized in that the spring pretensioning takes place by means of a compression spring (18) which is supported, on one end face, on the holding part (20) and, on its other end face, on a radial step (29) formed in the recess.

8. Time stamp according to Claim 1, characterized in that the bearing surface (22a) is formed by a narrowed bore portion (25) formed in the recess (21).

9. Time stamp according to one of the preceding claims, characterized in that the basic body (19) is divided into two and can be connected by means of a connecting device.

10. Time stamp according to Claim 9, characterized in that the connecting device is a weld (42).

11. Time stamp according to one of the preceding claims, characterized in that the end face (15) of the head portion (8) confronting the inner region of the mould is flush with the end face of the basic body (19) confronting the inner region of the mould.

12. Time stamp according to one of the preceding claims, characterized in that the outside diameter of the basic body (19) is constant.

13. Time stamp according to one of the preceding claims, characterized in that a threaded bore (28) is formed on the end face of the basic body (19) confronting the outer region of the mould, into which threaded bore (28) a threaded bolt (41) arranged on the mould engages in order to fix the basic body (19) within the mould.

14. Time stamp according to Claim 13, characterized in that the threaded bolt (41) engaging into the threaded bore (28) is made in one piece with the mould.

15. Time stamp according to one of the preceding claims, characterized in that the end face of the insert (7) confronting the inner region of the mould has a recess (16) suitable for the engagement of a tool.

16. Time stamp according to one of the preceding claims, characterized in that the recess (16) constitutes an information element of the time stamp.

## Revendications

1. Poinçon de datage destiné à être inséré dans un moule pour le formage du métal ou d'une matière plastique, comprenant un corps de base (19), à insérer dans le moule, dont la face frontale formant une partie de la surface de formage comporte une cavité cylindrique (21), une pièce insérée (7) sous forme d'une vis, contre laquelle est réalisée une surface de contact (11a) axiale située entre la partie formant la tête (8) et la partie formant la tige (10), laquelle pièce insérée étant logée de manière à pouvoir tourner dans la cavité cylindrique (21), et un dispositif de maintien qui est mis en précontrainte par un ressort, est disposé dans la cavité cylindrique et peut être mis en prise dans la pièce insérée (7), afin de maintenir la pièce insérée (7) dans le corps de base (19), dans des positions périphériques prédéterminées,
caractérisé
en ce que la cavité cylindrique (21) possède une surface de contact (22a) axiale, qui peut entrer en contact avec la surface de contact (11a) axiale de la pièce insérée
et en ce que le dispositif de maintien possède une pièce de maintien (20), mise sous précontrainte par un ressort, qui peut former un assemblage fileté avec la tige (10) de la pièce insérée (7), de telle sorte que la surface de contact (11a) peut être serrée contre la surface de contact (22a) sous l'effet de la précontrainte par ressort du dispositif de maintien.

2. Poinçon de datage selon la revendication 1, caractérisé en ce que la pièce de maintien (20) est un écrou fileté muni d'un dispositif empêchant la torsion, qui peut exécuter une course axiale (h) dans la cavité cylindrique (21).

3. Poinçon de datage selon la revendication 2, caractérisé en ce que la course axiale peut être exécutée entre une butée axiale arrière (33) réalisée dans le corps de base (19) et une butée axiale avant (31) réalisée dans le corps de base (19).

4. Poinçon de datage selon l'une des revendications 2 et 3, caractérisé en ce que le dispositif empêchant la torsion est formé par une broche (40) qui peut être fixée sur la périphérie de l'écrou fileté, laquelle broche s'engage dans un trou allongé (37), réalisé dans le corps de base (19) et orienté dans le sens axial, et est guidée dans ledit trou allongé.

5. Poinçon de datage selon l'une des revendications 2 et 3, caractérisé en ce que le dispositif empêchant la torsion est formé par un profilé à plusieurs rainures réalisé contre la face extérieure de la pièce de maintien (20), lequel profilé peut s'engrener avec un profilé à plusieurs rainures réalisé sur la face intérieure du corps de base (19).

6. Poinçon de datage selon la revendication 5, caractérisé en ce que le profilé à plusieurs rainures est formé par un élément à six pans, un élément pentagonal, un élément carré, un élément à trois pans ou seulement par deux saillies entre la pièce de maintien (20) et le corps de base (19).

7. Poinçon de datage selon l'une quelconque des revendications précédentes, caractérisé en ce que la précontrainte par ressort est exercée par un ressort de pression (18), qui s'appuie par une extrémité sur la pièce de maintien (20) et par l'autre extrémité sur un décrochement radial (29) réalisé dans la cavité.

8. Poinçon de datage selon la revendication 1, caractérisé en ce que la surface de contact (22a) est formée par une section rétrécie (25) d'un alésage réalisé dans la cavité (21).

9. Poinçon de datage selon l'une quelconque des revendications précédentes, caractérisé en ce que le corps de base (19) est divisé en deux parties, qui peuvent être réunies par un dispositif d'assemblage.

10. Poinçon de datage selon la revendication 9, caractérisé en ce que le dispositif d'assemblage est une soudure (42).

11. Poinçon de datage selon l'une quelconque des revendications précédentes, caractérisé en ce que la face frontale (15) de la tête (8), orientée vers la zone intérieure du moule, forme un assemblage affleuré avec la face frontale du corps de base (19), orientée vers la zone intérieure du moule.

12. Poinçon de datage selon l'une quelconque des revendications précédentes, caractérisé en ce que le diamètre extérieur du corps de base (19) reste constant.

13. Poinçon de datage selon l'une quelconque des revendications précédentes, caractérisé en ce qu'un trou taraudé (28) est réalisé sur la face frontale du corps de base (19) orientée vers la zone extérieure du moule, dans lequel trou taraudé s'engage un boulon fileté (41) disposé contre le moule et destiné à fixer le corps de base (19) à l'intérieur du moule.

14. Poinçon de datage selon la revendication 13, caractérisé en ce que le boulon fileté (41), qui s'engage dans le trou taraudé (28), est réalisé d'une seule pièce avec le moule.

15. Poinçon de datage selon l'une quelconque des revendications précédentes, caractérisé en ce que la face frontale de la pièce insérée (7), orientée vers la zone intérieure du moule, est munie d'un creux (16) adapté à l'attaque d'un outil.

16. Poinçon de datage selon l'une quelconque des revendications précédentes, caractérisé en ce que le creux (16) forme un élément avec informations du poinçon de datage.
